Europäisches Patentamt

European Patent Office

Office européen des brevets

(19)

(11) Veröffentlichungsnummer : **0 146 112**
**B1**

(12) **EUROPÄISCHE PATENTSCHRIFT**

(45) Veröffentlichungstag der Patentschrift :
01.02.89

(21) Anmeldenummer : 84115252.3

(22) Anmeldetag : 12.12.84

(51) Int. Cl.⁴ : **F 16 K   3/316**, F 16 K   3/28

(54) **Absperrkeil für Absperrschieber.**

(30) Priorität : 14.12.83 DE 3345133

(43) Veröffentlichungstag der Anmeldung :
26.06.85 Patentblatt 85/26

(45) Bekanntmachung des Hinweises auf die Patenterteilung : 01.02.89 Patentblatt 89/05

(84) Benannte Vertragsstaaten :
AT BE CH FR GB IT LI LU NL

(56) Entgegenhaltungen :
EP--A-- 0 129 826
DE--A-- 2 200 472
DE--A-- 2 942 091
US--A-- 3 045 963
US--A-- 3 837 617

(73) Patentinhaber : BOPP & REUTHER GMBH
Carl-Reuther-Strasse 1
D-6800 Mannheim 31 (DE)

(72) Erfinder : Walfried David
Raiffeisenstrasse 10
6701 Maxdorf, (DE)

## Beschreibung

Die Erfindung bezieht sich auf einen Absperrkeil für Absperrschieber, der im Schiebergehäuse quer zur Strömung in senkrechter Richtung verschiebbar ist, und auf dessen rohem Gußeisenkörper eine gummielastische Umhüllung aufgebracht ist, deren Dichtflächenabschnitte sich in der Schieberschließstellung elastisch gegen die Sitzflächen des Schiebergehäuses legen, und der an seinen beiden Schmalseiten Führungsnuten trägt, die entsprechende Führungsleisten des Schiebergehauses umgreifen.

Ein derartiger Absperrkeil ist aus der DE-AS-29 42 091 bekannt. Bei diesem weichdichtenden Schieber hat man bisher nicht nur die an den Gehäusesitzflächen anliegenden, relativ dickwandigen elastischen Dichtstränge im Bereich der Abdichtflächen auf den gußeisernen Absperrkeil aufgummiert sondern es wurde auch die übrige Oberfläche des Absperrkeils allseits mit einer gummielastischen Umhüllung versehen, damit die dickeren Dichtflächenabschnitte fester im Absperrkeil gehalten sind und der Absperrkeil auf seiner gesamten Oberfläche korrosionsgeschützt ist. Die Gleitflächen der Fuhrungsnuten wurden hierbei nicht mit gummiert, damit sie zusammen mit den Führungsleisten des Schiebergehäuses eine relativ reibungsarme Gleitführung bilden.

Beim Einbau derartiger Absperrschieber in Trinkwasserleitungen hat es sich jedoch gezeigt, daß in den eisernen Führungsnuten des Absperrkeils Rost auftreten kann, so daß man neuerdings auch dazu übergegangen ist, die Gleitflächen der Führungsnuten zu gummieren. Eine solche in den Führungsnuten des Absperrkeils vorgesehene gummielastische Auskleidung besitzt jedoch sehr schlechte Gleiteigenschaften und unterliegt einem sehr hohen Abrieb, so daß einerseits infolge der hohen Reibung hohe Spindelkräfte erforderlich sind und andererseits die Keilführungen sehr schnell verschleißen.

Bei einem anderen aus der DE-A-22 00 472 bekannten Absperrschieber ist der Absperrkeil mit seitlich vorspringenden Führungsrippen versehen, die zur Führung des Absperrkeils im Schiebergehäuse in Längsführungsnuten des Schiebergehäuses längsverschieblich geführt sind. Zur Erzielung eines guten Korrosionsschutzes sind in den Langsführungsnuten des Schiebergehäuses im Querschnitt U-förmige Einsätze aus nichtrostendem Stahl oder aus Kunststoff herausnehmbar eingelegt. Diese Einsätze tragen an ihrem einen Ende zur Halterung der Einsätze in den Führungsnuten des Schiebergehäuses eine Nase, die in eine Vertiefung des Schiebergehäuses eingesteckt ist und an ihrem anderen Ende ebenfalls eine Nase zur Einschiebung in eine Vertiefung des Schiebergehäuses. Die relativ langen, dünnwandigen, sich über die ganze Höhe des Schiebergehäuses erstreckenden in die Führungnut eingelegten Einsätze biegen sich leicht durch, so daß sie durch Ablagerungen aus dem strömenden Medium leicht unterwandert werden und sich in der Gehäusemitte nach innen durchbiegen können. Dadurch kann es zu einem Verklemmen des Absperrkeils in den Längsführungsnuten des Schiebergehäuses kommen.

Aufgabe der Erfindung ist es, den Absperrkeil so auszubilden, daß er auf seiner gesamten Oberfläche, d. h. auch im Bereich der Keilführung sicher korrosionsgeschützt ist und trotzdem eine gute Gleitführung besitzt, die nur geringe Drehmomente für die Spindelbetätigung erfordert und besonders abriebfest ist.

Die Lösung dieser Aufgabe wird in den kennzeichnenden Merkmalen des Patentanspruches 1 gesehen.

Dadurch, daß zwei vorgefertigte, mit guten Gleiteigenschaften, hoher Verschleißfestigkeit und ausreichender Temperaturbeständigkeit versehene U-förmige Kunststoff-Gleitschuhe mit einem Spalt zum Boden und zu den beiden Seitenwänden der Führungsnuten hin in die Führungsnuten des rohgegossenen Absperrkeils eingelegt sind und der zwischen den Gleitschuh-Außenflächen und den Führungsnuten verbleibende Hohlraum beim Aufbringen der gummielastischen Umhüllung mit der Spritzmasse der gummielastischen Umhüllung hinterfüllt ist, erhält der Absperrkeil in einfachster Weise auf seiner gesamten Oberfläche und damit auch im Bereich der Keilführungen einen sicheren Korrosionsschutz und ist gleichzeitig mit einer ausgezeichneten Gleitführung versehen, die sich durch einen besonders niedrigen Reibungswiderstand und durch geringsten Verschleiß kennzeichnet. Da das Hinterspritzen der Gleitschuhe und das Spritzen der gummielastischen Umhüllung zur selben Zeit in einem Arbeitsgang mit derselben Spritzmasse erfolgt, ist kein besonderer Arbeitsgang und kein zusätzliches Haltmittel für die Befestigung der Gleitschuhe am Absperrkeil erforderlich und nach Abschluß des auch für die Umhüllung notwendigen Vulkanisierungsprozesses sind die beiden Gleitschuhe einerseits fest im hinterspritzten gummielastischen Werkstoff und in der gummielastischen Umhüllung und andererseits fest im rohgegossenen Absperrkörper verankert. Die Gleitschuhe sind hierbei von der gummielastischen Umhüllung des Absperrkeils und von der Hinterspritzschicht dicht umschlossen, so daß sich ein nahtloser dichter und damit korrosionssicherer Übergang von den beiden Gleitschuhen zu der gummielastischen Umhüllung ergibt.

Auch können die Führungsnuten des Absperrkeils rohgegossen bleiben, da sich die Gußtoleranzen durch eine entsprechend fixierte Halterung der Gleitschuhe vor dem Spritzen ausgleichen lassen. Außerdem ergibt sich beim rohen Guß eine noch bessere Haftung der hinterspritzten Halteschicht.

In Weiterentwicklung der Erfindung wird gemäß dem Merkmal des Patentanspruches 2 vorgeschlagen, den Boden und/oder die Seitenwände der Kunststoff-Gleitschuhe auf der Außenseite mit einer Anzahl quer zur Gleitführungslängsachse verlaufender Halterippen zu versehen, durch die die Gleitschuhe im hinterspritzten gummielastischen Werkstoff besonders fest verankert sind und dadurch die beim Betätigen der Schieberspindel auf die Keilführung des Absperrkeils übertragenen Schubkräfte sicher aufnehmen können.

Eine besonders einfache Verankerung der Kunststoff-Gleitschuhe in den Führungsnuten des Absperrkeils läßt sich durch das im Patentanspruch 3 gekennzeichnete Verfahren erzielen, bei dem die Kunststoff-Gleitschuhe zunächst auf Halteleisten der Spritzform für das Aufbringen der gummielastischen Umhüllung aufgeklemmt werden, dann der rohre Absperrkeil mit seinen Führungsnuten über die im Querschnitt kleineren Gleitschuhe geschoben wird und anschließend der Hohlraum zwischen den Außenflächen der Gleitschuhe und den Führungsnuten während des Spritzens der Gummiumhüllung gleichzeitig von der Spritzmasse hinterfüllt wird. Da das Hinterspritzen der Gleitschuhe und das Spritzen der Umhüllung zur selben Zeit in einem Arbeitsgang mit derselben Spritzmasse erfolgt, ist kein besonderer Arbeitsgang und kein zusätzliches Haltemittel für die Befestigung der Gleitschuhe am Absperrkeil erforderlich und nach Abschluß des auch für die Umhüllung notwendigen Vulkanisierungsprozesses sind die beiden Gleitschuhe fest im Absperrkeil verankert. Da der synthetische Kautschuk für die Gummiumhüllung des Absperrkeils üblicherweise mit 200 bar und mehr in die Form eingespritzt wird, ist auch gewährleistet, daß die Gleitschuhe an allen Stellen porenfrei von der Spritzmasse hinterfüllt werden, so daß sich eine geschlossene gummielastische Schicht zwischen den Gleitschuhen und dem Absperrkeil ergibt, die eine feste und dauerhafte Verbindung mit den Gleitschuhen eingeht.

Diese feste und dauerhafte Verbindung zwischen den Gleitschuhen und dem Elastomer wird noch dadurch gewährleistet, daß die Kunststoff-Gleitschuhe entsprechend Anspruch 4 vor dem Einlegen in die Spritzform gereinigt und/oder gebeizt und mit einem entsprechenden Haftvermittler versehen werden.

Weisen die Gleitschuhe entsprechend dem Merkmal des Anspruchs 5 außen im Bereich zwischen den Haltequerrippen abgerundete und/oder abgeschrägte Übergänge auf, so kann die hinterfüllte Spritzmasse der gummielastischen Umhüllung die Haltequerrippen noch besser umfließen und legt sich dadurch stets vollflächig und porenfrei gegen die Gleitschuhaußenflächen.

Um auch bei großen Schiebernennweiten, die auf die Gleitschuhe einwirkenden Schubkräfte mit Sicherheit aufnehmen zu können, kann es sich nach dem Merkmal des Anspruchs 6 auch empfehlen, die Zwischenräume zwischen den Haltequerrippen der Kunststoff-Gleitschuhe als schwalbenschwanzartige Hinterschneidungen auszubilden. Der gummielastische Werkstoff dringt hierbei voll in die schwalbenschwanzartigen Hinterschneidungen ein und bewirkt hierdurch eine nicht mehr lösbare Verzahnung der Gleitschuhe mit der gummielastischen Halteschicht.

Zweckmäßigerweise ist der Absperrkörper entsprechend dem Merkmal des Anspruchs 7 in der Bodenmitte der Führungsnuten mit einer eingegossenen kleinen Längsnut versehen, die einen Zulaufkanal für die Hinterspritzmasse der Gleitschuhe bildet. Durch diesen Zulaufkanal wird sichergestellt, daß der zwischen den Gleitschuhen und den Führungsnuten des Absperrkeils verbleibende Hohlraum vollständig mit der Spritzmasse gefüllt wird, auch wenn die Gleitschuhe auf ihrer Außenseite mit einer Anzahl Haltequerrippen versehen sind.

Weiterhin wird entsprechend dem Merkmal des Anspruchs 8 vorgeschlagen, die Kunststoff-Gleitschuhe an den Innenlängskanten mit Klemmnuten zu versehen, die vorzugsweise einen einen Halbkreis geringfügig überschreitenden Querschnitt aufweisen, wodurch eine einfache Lagefixierung der Gleitschuhe beim Hinterspritzen möglich wird. Hierfür brauchen die Gleitschuhe lediglich vor dem Spritzen der gummielastischen Umhüllung in entsprechende Vorsprünge der Spritz- und Vulkanisierform schnapperartig eingedrückt zu werden.

Abgesehen hiervon ist es vorteilhaft, den rohren Absperrkeil auf der einen Breitseite gemäß dem Merkmal des Anspruchs 9 mit vorzugsweise drei eingegossenen Zentriersacklöchern zu versehen. Durch diese Zentriersacklöcher ist gewährleistet, daß die in die Spritzform eingelegten Absperrkeile stets in der richtigen Lage gehalten sind, so daß auch die vor dem Spritzen in die Form einzusetzenden Gleitschuhe so zu liegen kommen, daß sie allseits mit dem gewünschten Spalt in die beiden Führungsnuten des Absperrkeils eingreifen.

Eine genaue Lage der Gleitschuhe zum rohen Absperrkeil ist durch die Verwendung einer im Anspruch 10 gekennzeichneten Spritzform gewährleistet, deren untere Formschale mit Zentrierzapfen versehen ist, in die die Zentriersacklöcher des rohen Absperrkeils eingreifen. Beim flachen Auflegen des rohen Absperrkeils auf die untere Formschale wird hierdurch der Absperrkeil sicher fixiert und durch die definierte Lage der in der Spritzform vorgesehenen Halteleisten, auf deren Vorsprünge die Gleitschuhe mit ihren Klemmnuten durch schnapperartigen Eingriff gehalten werden, ist auch die Lage der Gleitschuhe zum Absperrkeil genau vorherbestimmt, so daß die Gleitschuhe vor dem Hinterspritzen stets zentrisch in den Führungsnuten zu liegen kommen.

Die Erfindung wird anhand von Ausführungsbeispielen in der Zeichnung näher erläutert, und zwar zeigen:

Fig. 1 einen die erfindungsgemäßen Gleitschuhe tragenden Absperrkeil mit gummielastischer Umhüllung in Vorderansicht,

Fig. 2 einen Querschnitt durch den Absperrkeil nach Linie II-II der Fig. 1,

Fig. 3 den Absperrkeil nach den Fig. 1 und 2 in Seitenansicht,

Fig. 4 den Gleitschuh in Draufsicht,

Fig. 5 den Gleitschuh nach Fig. 4 in Seitenansicht,

Fig. 6 den Gleitschuh nach den Fig. 4 und 5 in Rückansicht,

Fig. 7 den Gleitschuh nach Fig. 4 in vergrößertem Maßstab,

Fig. 8 einen Absperrkeil mit einem anderen Gleitschuh teilweise im Längsschnitt,

Fig. 9 die geschlossene Spritzform im Schnitt,

Fig. 10 eine Draufsicht auf den die Gleitschuhe tragenden Mittelteil der Spritzform,

Fig. 11 einen Schnitt durch die Halteleiste nach Linie XI-XI der Fig. 10 mit aufgestecktem Gleitschuh,

Fig. 12 die untere Formschale mit den Zentrierzapfen in Draufsicht und

Fig. 13 die untere Formschale im Schnitt mit eingelegtem rohem Absperrkeil.

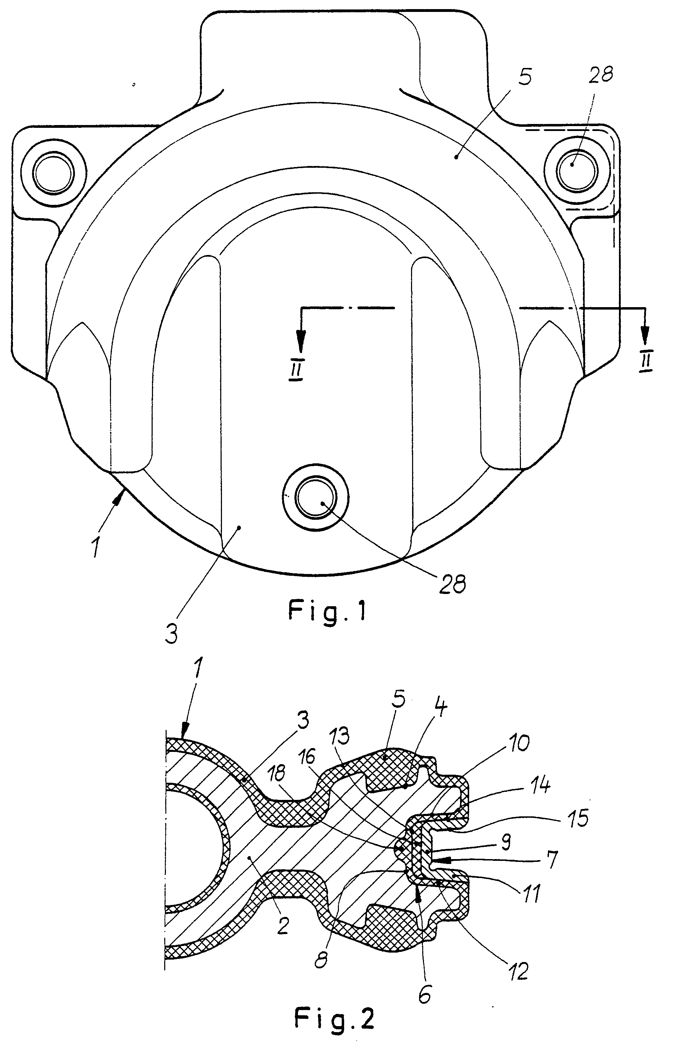

Der in den Fig. 1-3 dargestellte gummierte Absperrkeil 1 wird im wesentlichen aus dem rohen Gußeisenkörper 2 und der aufgespritzten gummielastischen Umhüllung 3 gebildet. Im Bereich der mit den Sitzflächen des Schiebergehäuses zusammenwirkenden Abdichtflächen ist der Gußeisenkörper 2 mit Nuten 4 versehen und die gummielastische Umhüllung 3 ist hier wulstartig verdickt, so daß der Absperrkeil 1 weichelastische Dichtstränge 5 aufweist. Der rohe Gußeisenkörper 2 ist auf seinen beiden Schmalseiten mit eingegossenen Führungsnuten 6 versehen, in die die Kunststoff-Gleitschuhe 7 fest eingesetzt sind.

Die beiden Kunststoff-Gleitschuhe 7 sind im Querschnitt kleiner als die eingegossenen Führungsnuten 6, so daß zwischen dem Boden 8 der Führungsnut 6 und dem Boden 9 der Gleitschuhe 7 sowie zwischen den Seitenwänden 10 der Führungsnuten 6 und Seitenwänden 11 der Gleitschuhe 7 jeweils ein Spalt verbleibt, die zusammen den Hohlraum 12 ergeben, der beim Spritzen der gummielastischen Umhüllung 3 von der Spritzmasse 13 hinterfüllt wird. Nach dem Vulkanisierungsprozeß für die gummielastische Umhüllung 3 bildet auch die Hinterspritzmasse 13 eine feste elastische Gummischicht, durch die die Außenflächen 14 der Gleitschuhe 7 in den Führungsnuten 6 fest mit dem Gußkörper 2 verbunden sind. Die Kunststoff-Gleitschuhe 7 sind bis auf ihre an den Führungsleisten des nicht dargestellten Schiebergehäuses anliegenden Gleitflächen 15 von der gummielastischen Umhüllung 5 dicht umschlossen, so daß ein nahtfreier Übergang von der gummielastischen Umhüllung 3 zu den in der Hinterfüllschicht 13 eingebetteten Kunststoff-Gleitschuhen 7 besteht.

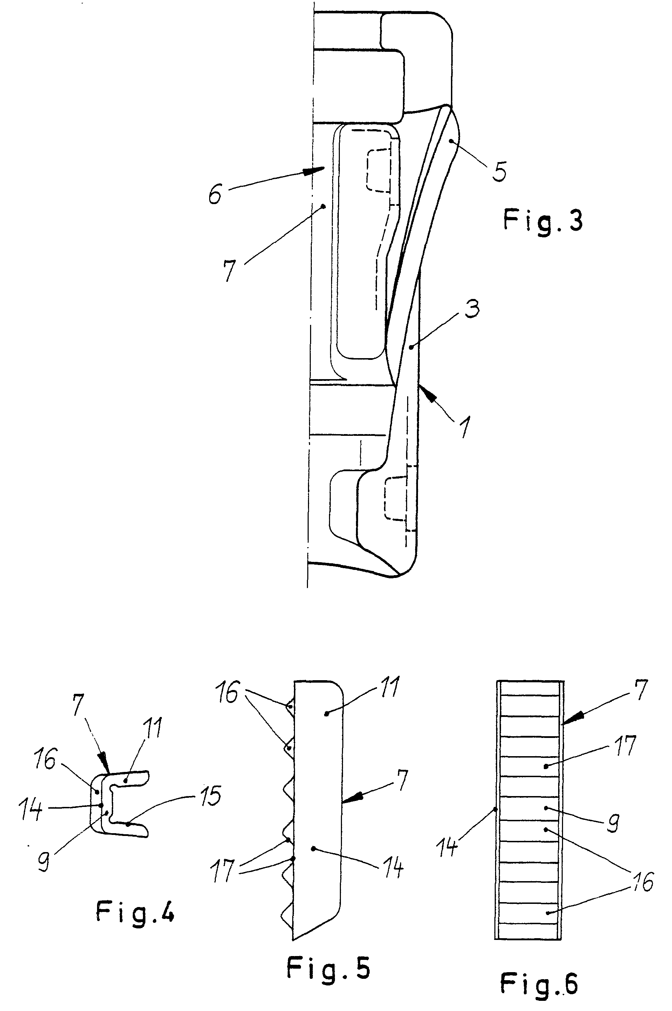

Wie die Fig. 4-7 zeigen, ist der Boden 9 der Kunststoff-Gleitschuhe 7 mit einer Anzahl Haltequerrippen 16 versehen. Durch diese Haltequerrippen sind die Gleitschuhe noch fester in der Hinterfüllschicht 13 eingebettet und verankert. Im Bereich zwischen den Haltequerrippen 16 weisen die Kunststoff-Gleitschuhe 7 abgerundete und abgeschrägte Übergänge 17 auf, damit die Hinterspritzmasse 13 die Haltequernuten 16 noch besser umfließen kann. Um einen ausreichenden Zulaufkanal für die Hinterspritzmasse 13 zu schaffen, ist in der Mitte des Bodens 8 der Führungsnuten 6 eine kleine Längsnut 18 von halbkreisförmigem Querschnitt in den rohen Absperrkeil 2 eingegossen, wie aus der Fig. 2 zu ersehen ist. Zum Halten der Gleitschuhe 7 in der Spritzform während des Hinterspritzvorganges sind die Schuhe an den Innenlängskanten mit Klemmnuten 19 versehen, in die entsprechende Vorsprünge der Spritzform schnapperartig eingreifen können.

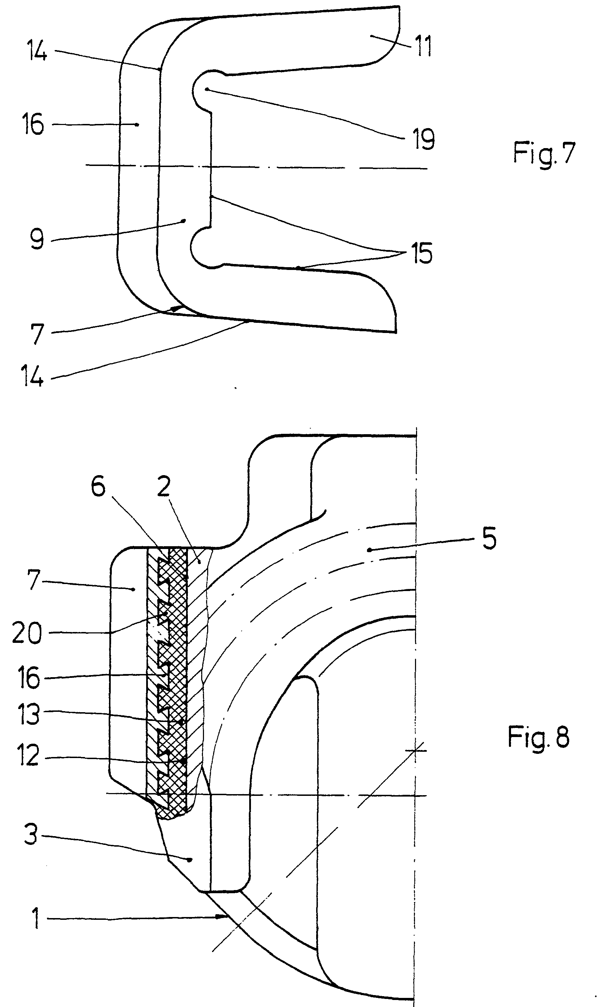

In der Fig. 8 ist eine andere Ausführungsform der Haltequerrippen 16 der Gleitschuhe 7 gezeigt. Die Zwischenräume zwischen den Haltequerrippen sind hier als schwalbenschwanzartige Hinterschneidungen 20 ausgebildet, damit sich eine noch feste Verankerung der Gleitschuhe 7 in der elastischen Verbindungsschicht 13 ergibt.

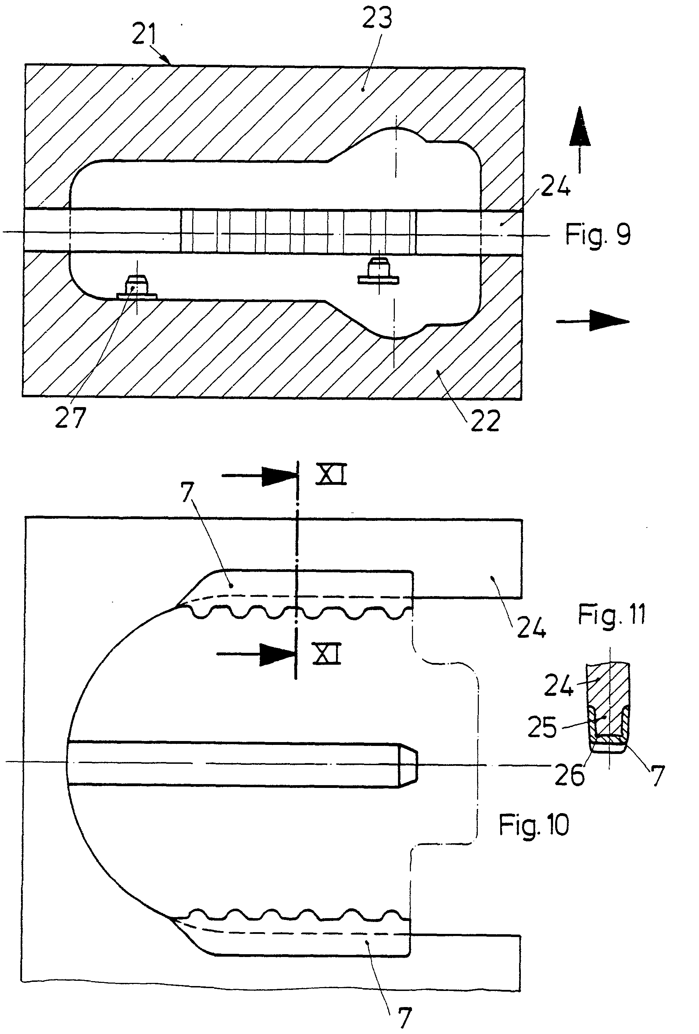

Die in der Fig. 9 gezeigte Spritzform 21 besteht aus der unteren Formschale 22, der oberen Formschale 23 und dem Mittelteil 24. Die beiden Formschalen 22 und 23 begrenzen jeweils eine Hälfte der Außenkonturen der aufzuspritzenden gummielastischen Umhüllung 3 des Absperrkeils 1. Der Mittelteil 24 der Spritzform 21 ist feststehend ausgebildet, während die obere Formschale 23 zum Einlegen des Absperrkeils nach oben abgenommen wird. Die untere Formschale 22 wird zum Einlegen des Absperrkeils in Pfeilrichtung parallel zum feststehenden Mittelteil 24 verschoben.

Wie die Fig. 10 und 11 zeigen, ist der feststehende Mittelteil 24 mit Halteleisten 25 versehen, auf die die Gleitschuhe 7 aufgeklemmt sind. Zu diesem Zweck besitzen die Halteleisten 25 Vorsprünge 26, die in die Klemmnuten 19 der Gleitschuhe 7 schnapperartig eingreifen.

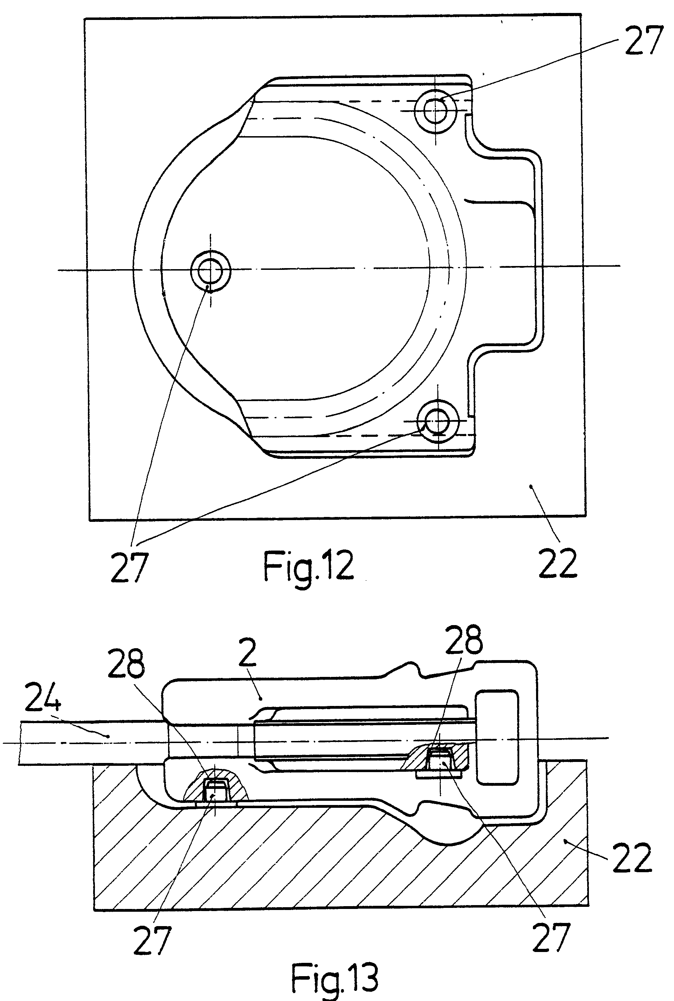

Die Fig. 12 zeigt die untere Formschale 22 mit den Formvertiefungen für die zu spritzende elastische Umhüllung in Draufsicht sowie die Anordnung der 3 Zentrierzapfen 27, die zur Lagefixierung des einzulegenden Absperrkeils vorgesehen sind. Während die Fig. 12 noch die leere Formhälfte ohne eingelegten Absperrkeil zeigt, ist der rohgegossene Absperrkeil 2 in der Fig. 13 bereits in die aus der Spritzform 21 herausgezogene untere Formhälfte 22 eingelegt. Hierbei greifen die Zentrierzapfen 27 in die am Absperrkeil vorgesehenen Zentriersacklöcher 28 ein und fixieren dadurch die Lage des Absperrkeils sowohl gegenüber der elastischen Umhüllung als auch gegenüber den im Mittelteil 24 eingesetzten Gleitschuhen 7. Durch diese Lagefixierung des rohen Absperrkeils 2 kommen die im Mittelteil 24 lagefixierten Gleitschuhe 7 beim Einschieben der unteren Formschale 22 in die Spritzform 21 zentrisch in den Führungsnuten 6 des Absperrkeils zu liegen.

**Patentansprüche**

1. Absperrkeil für Absperrschieber, der im Schiebergehäuse quer zur Strömung in senkrechter Richtung verschiebbar ist, und auf dessen rohem Gußeisenkörper eine gummielastische Umhüllung aufgebracht ist, deren Dichtflächenabschnitte sich in der Schieberschließstellung elastisch gegen die Sitzflächen des Schiebergehäuses legen, und der an seinen beiden Schmalseiten Führungsnuten trägt, die entsprechende Führungsleisten des Schiebergehäuses umgreifen, dadurch gekennzeichnet, daß zwei vorgefertigte, mit guten Gleiteigenschaften, hoher Verschleißfestigkeit und ausreichender Temperaturbeständigkeit versehene U-förmige Kunststoff-Gleitschuhe (7) mit einem Spalt zum Boden (8) und zu den beiden Seitenwänden (10) der Führungsnuten (6) hin in die Führungsnuten des rohgegossenen Absperrkeils (2) eingelegt sind und der zwischen den Gleitschuhaußenflächen (14) und den Führungsnuten (6) verbleibende Hohlraum (12) beim Aufbringen der gummielastischen Umhüllung (3) mit der Spritzmasse (13) der gummielastischen Umhüllung (3) so hinterfüllt ist, daß die Kunststoff-Gleitschuhe (7) bis auf ihre an den Führungsleisten des Gehäuses anliegenden Gleitflächen (15) von der gummielastischen Umhüllung (3) dicht umschlossen sind.

2. Absperrkeil nach Anspruch 1, dadurch gekennzeichnet, daß der Boden (9) und/oder die Seitenwände (11) der Kunststoff-Gleitschuhe (7) auf der zum Absperrkeil (1) gerichteten Außenseite (14) mit einer Anzahl quer zur Gleitführungslängsachse verlaufender und im hinterspritzten gummielastischen Werkstoff (13) fest verankerter Halterippen (16) versehen ist.

3. Verfahren zum Verankern der Kunststoff-Gleitschuhe in den Führungsnuten des Absperrkeils nach Anspruch 1 oder 2, dadurch gekennzeichnet, daß zunächst die beiden vorgefertigten U-förmigen Kunststoff-Gleitschuhe (7) mit ihren freibleibenden Gleitflächen (15) auf Halteleisten (25) der für das Aufspritzen und Vulkanisieren der gummielastischen Umhüllung (3) vorgesehenen Form (21) aufgeklemmt werden, dann der rohgegossene Absperrkeil (2) nach Einlegen in die Spritzform mit seinen Führungsnuten (6) über die im Querschnitt kleineren Gleitschuhe (7) geschoben wird und nach Schließen der Spritzform (21) der Hohlraum (12) zwischen den Außenflächen (14) der Gleitschuhe und den drei Seiten der Führungsnuten (6) während des Spritzens der gummielastischen Umhüllung (3) gleichzeitig von der Spritzmasse (13) hinterfüllt wird und die Gleitschuhe (7) durch den Vulkanisierungsprozeß fest im Absperrkeil verankert werden.

4. Verfahren nach Anspruch 3, dadurch gekennzeichnet, daß die Kunststoff-Gleitschuhe (7) vor dem Einlegen in die Spritzform (21) gereinigt und/oder gebeizt und mit einem eine dauerhafte feste Verbindung zwischen den Kunststoff-Gleitschuhen und dem Elastomer gewährleistenden Haftvermittler versehen werden.

5. Absperrkeil nach Anspruch 2, dadurch gekennzeichnet, daß die Kunststoff-Gleitschuhe (7) außen im Bereich zwischen den Haltequerrippen (16) abgerundete und/oder abgeschrägte Übergänge (17) aufweisen.

6. Absperrkeil nach Anspruch 2, dadurch gekennzeichnet, daß die Zwischenräume zwischen den Haltequerrippen (16) der Kunststoff-Gleitschuhe (7) als schwalbenschwanzartige Hinterschneidungen (20) ausgebildet sind.

7. Absperrkeil nach einem oder mehreren der Ansprüche 1, 2, 5 und 6, dadurch gekennzeichnet, daß in der Bodenmitte der Führungsnuten (6) eine kleine Längsnut (18) als Zulaufkanal für die Hinterspritzmasse (13) der Kunststoff-Gleitschuhe (7) in den Absperrkeil (2) eingeschlossen ist.

8. Absperrkeil nach einem oder mehreren der Ansprüche 1, 2, 5 bis 7, dadurch gekennzeichnet, daß die Kunststoff-Gleitschuhe (7) an den Innenlängskanten Klemmnuten (19) tragen, die vorzugsweise einen einen Halbkreis geringfügig überschreitenden Querschnitt aufweisen.

9. Absperrkeil nach einem oder mehreren der Ansprüche 1, 2, 5 bis 8, dadurch gekennzeichnet, daß auf der einen Breitseite des rohen Absperrkeils (2) vorzugsweise drei zur Lagefixierung des Absperrkeils und der Kunststoff-Gleitschuhe (7) beim Hinterspritzen dienende Zentriersacklöcher (25) eingegossen sind.

10. Spritzform zur Durchführung der Verfahren nach den Ansprüchen 3 und 4 und zur Fixierung der Gleitschuhe und des Absperrkeils nach den Ansprüchen 8 und 9, dadurch gekennzeichnet, daß die untere, die eine Hälfte der Außenkonturen der gummielastischen Umhüllung (3) abbildende Formschale (22) mit Zentrierzapfen (27) für die Zentriersacklöcher (28) des rohen Absperrkeils (2) versehen ist und zwei mit Vorsprüngen (26) zum schnapperartigen Eingreifen in die Klemmnuten (19) der Kunststoff-Gleitschuhe (7) ausgestattete Halteleisten (25) vorgesehen sind, deren Lage zur Lage der Zentrierzapfen (27) der unteren Formschale (22) so fixiert ist, daß die Gleitschuhe (7) zentrisch in den Führungsnuten (6) liegen.

**Claims**

1. Shut-off gate for slide valves, which is displaceable in the slide housing in a vertical direction transverse to the flow, and on the rough cast iron body of which is arranged a rubber-elastic sheathing, the sealing surface sections of which bear resiliently against the seating surfaces of the slide valve housing in the closed position of the slide valve and which on its two narrow sides carries guiding grooves which enflank corresponding guiding webs of the slide valve housing, characterised in that the two prefabricated U-shaped plastics material slide shoes (7) endowed with good anti-friction properties, high resistance to wear and adequate thermal stability are installed with spacing from the base (8) and from the two sidewalls (10) of the guiding grooves (6) in the guiding grooves of the rough-cast shut-off gate (2) and that the hollow space (12) remaining between the outer slide shoe surfaces (14) and the guiding grooves (6) is so filled upon application of the rubber-elastic sheathing (3) with the injection composition (13) of the rubber-elastic sheathing (3), that the plastics material slide shoes (7) are sealingly enclosed by the rubber-elastic sheathing (3) up to their sliding surface bearing on the guiding webs of the housing.

2. Shut-off gate according to claim 1, characterised in that the base (9) and/or the sidewalls (11) of the plastics material slide shoes (7) are provided on the outer side (14) facing towards the shut-off gate (1) with a number of holding ribs (16) extending transversely to the longitudinal axis of the sliding guide and firmly anchored in the rubberelastic material (13) injected behind.

3. Method of anchoring the plastics material slide shoes in the guiding grooves of the shut-off gate according to claim 1 or 2, characterised in that the two prefabricated U-shaped plastics material slide shoes (7) are initially clamped with their uncovered sliding surfaces (15) on holding webs (25) of the mould (21) provided for the injection and vulcanisation of the rubber-elastic sheathing (3), then the rough-cast shut-off gate (2) after insertion into the injection mould is pushed with its guiding grooves (6) over the cross-sectionally smaller slide shoes (7) and after closing the injection mould (21), the hollow space (12) between the outer surfaces (14) of the slide shoes and the three sides of the guiding grooves (6) is simultaneously filled in by the injecting composition (13) during the injection of the rubber-elastic sheathing (3) and the slide shoes (7) are firmly anchored in the shut-off gate by the vulcanising process.

4. Method according to claim 3, characterised in that the plastics material slide shoes (7) are cleaned and/or pickled prior to insertion into the injection mould (21) and are provided with a bonding agent ensuring a durable firm joint between the plastics material slide shoes and the elastomer.

5. Shut-off gate according to claim 2, characterised in that the plastics material side shoes (7) have on the outside rounded and/or chamfered transitions (17) in the area between the transverse holding ribs (16).

6. Shut-off gate according to claim 2, characterised in that the gaps between the transverse holding ribs (16) of the plastics material slide shoes (7) are formed as dovetailtype excisions (20).

7. Shut-off gate according to one or more of the claims 1, 2, 5 and 6, characterised in that a small longitudinal groove (18) acting as a feed channel for the back-filling composition (13) of the plastics material slide shoes (7) is incorporated in the shut-off gate (2) in the centre of the bottom of the guiding grooves (6).

8. Shut-off gate according to one or more of the claims 1, 2, 5 to 7, characterised in that the plastics material slide shoes (7) are provided on the inner longitudinal edges with clamping grooves (19) which preferably have a cross-section slightly exceeding a semi-circle.

9. Shut-off gate according to one or more of the claims 1, 2, 5 to 8, characterised in that preferably three blind centering holes (28) are incorporated by casting in one major side of the rough shut-off gate (2), to establish the position of the shut-off gate and of the plastics material slide shoes (7) during injection.

10. Injection mould for application of the method according to claims 3 and 4 and for securing the slide shoes and the shut-off gate according to claims 8 and 9, characterised in that the lower mould shell (22) representing the one half of the external profile of the rubber-elastic sheathing (3) is provided with centering studs (27) for the blind centering holes (28) of the rough shut-off gate (2) and two holding webs (25) with projections (26) are provided for latching engagement in the clamping grooves (19) of the plastics material slide shoes (7), the setting of the webs with respect to the position of the centering studs (27) of the lower mould shell (22) being so determined that the slide shoes (7) are centrally positioned in the guiding grooves (6).

**Revendications**

1. Coin d'arrêt pour une vanne d'arrêt, déplaçable par coulissement dans le boîtier de vanne transversalement à l'écoulement, suivant une direction verticale, sur le corps en fonte brut duquel est appliqué un enrobage en gomme élastique dont des parties de surface d'étanchéité s'appuient, d'une manière élastique contre les surfaces de siège du boîtier de vanne, dans la position de fermeture de la vanne, et portant, au niveau de ses deux petits côtés, des rainures de guidage qui enserrent des ailettes de guidage correspondantes du boîtier de vanne, caractérisé en ce que deux patins de glissement en matière synthétique préfabriqués (7) ayant une configuration en forme de U et dotés de bonnes propriétés de glissement, d'une haute résistance à l'usure et d'une stabilité thermique suffisante sont insérés dans les rainures de guidage (6) du coin d'arrêt brut de coulée (2), avec un interstice vis-à-vis du fond (8) et des deux parois latérales (10) desdites rainures de guidage, l'espace vide (12) laissé entre les surfaces extérieures (14) des patins de glissement et les rainures de guidage (6) étant rempli postérieurement, lors de l'application de l'enrobage en gomme élastique (3), par la matière à mouler par injection (13) dudit enrobage en gomme élastique (3), de telle façon que les patins de glissement en matière synthétique (7) sont enveloppés d'une manière étanche par l'enrobage en gomme élastique (3) jusque sur leurs surfaces de glissement (15) contiguës aux ailettes de guidage du boîtier.

2. Coin d'arrêt selon la revendication 1, caractérisé en ce que le fond (9) et/ou les parois latérales (11) des patins de glissement en matière synthétique (7) présentent, sur leur face extérieure tournée vers le coin d'arrêt (1), un certain nombre de nervures de retenue (16) qui s'étendent transversalement par rapport à l'axe longitudinal de guidage à coulissement et sont solidement ancrées dans le matériau en gomme élastique moulé postérieurement par injection.

3. Procédé pour ancrer les patins de glissement en matière synthétique dans les rainures de guidage du coin d'arrêt selon la revendication 1 ou 2, caractérisé en ce qu'il consiste, tout d'abord à caler les deux patins de glissement en matière synthétique préfabriqués (7) ayant une configuration en forme de U, par leurs surfaces de glissement restant libres (15), sur des lardons de support (25) du moule (21) prévu pour l'injection et la vulcanisation de l'enrobage en gomme élastique (3), ensuite, à faire glisser, après l'avoir inséré dans le moule à injection, le coin d'arrêt brut de coulée (2), par ses rainures de guidage (6) sur les patins de glissement (7) plus petits en section transversale, puis, une fois fermé le moule à injection (21), à procéder, simultanément à l'injection de l'enrobage en gomme élastique (3), au remplissage postérieur de l'espace vide (12) situé entre les surfaces extérieures (14) des patins de glissement et les trois faces des rainures de guidage (6), avec la matière à mouler par injection (13), et à ancrer solidement les patins de glissement (7) dans le coin d'arrêt grâce au processus de vulcanisation.

4. Procédé selon la revendication 3, caractérisé en ce que, préalablement à leur insertion dans le moule à injection (21), les patins de glissement en matière synthétique (7) sont nettoyés et/ou décapés et munis d'un agent de pontage garantissant une liaison solide et durable entre les patins de glissement en matière synthétique et l'élastomère.

5. Coin d'arrêt selon la revendication 2, caractérisé en ce que les patins de glissement en matière synthétique (7) présentent extérieurement, dans la région située entre les nervures de retenue transversales (15), des zones de transition arrondies et/ou biseautées (17).

6. Coin d'arrêt selon la revendication 2, caractérisé en ce que les espaces intermédiaires entre les nervures de retenue transversales (16) des patins de glissement en matière synthétique (7) sont conçues sous la forme de contre-dépouilles du type à queue d'aronde (20).

7. Coin d'arrêt selon l'une au moins des revendications 1, 2, 5 et 6, caractérisé en ce que le milieu du fond des rainures de guidage (6) renferme une petite gorge longitudinale (18) faisant office de canal d'amenée pour la matière (13) à mouler par injection postérieurement des patins de glissement en matière synthétique (7), dans le coin d'arrêt (2).

8. Coin d'arrêt selon l'une au moins des revendications 1, 2, 5 à 7, caractérisé en ce que les patins de glissement en matière synthétique (7) comportent, au niveau de leurs arêtes longitudinales intérieures, des rainures de blocage (19) qui présentent, de préférence, une section transversale légèrement supérieure à un demi-cercle.

9. Coin d'arrêt selon l'une au moins des revendications 1, 2, 5 à 8, caractérisé en ce que, sur l'un au moins des grands côtés du coin d'arrêt brut (2) sont de préférence prévus, venus de fonderie, trois trous de centrage borgnes (28) servant à fixer en position le coin d'arrêt et les patins de glissement en matière synthétique (7), lors de l'injection postérieure.

10. Moule à injection pour mettre en oeuvre le procédé selon les revendications 3 et 4 et pour fixer les patins de glissement et le coin d'arrêt selon les revendications 8 et 9, caractérisé en ce que la coquille de moule inférieure (22) formant l'une des moitiés des contours extérieurs de l'enrobage en gomme élastique (3) est pourvue de boulons de centrage (27) destinés aux trous de centrage borgnes (28) du coin d'arrêt brut (2), tandis qu'il est prévu deux lardons de support (25) munis de parties en saillie (26) en vue de s'emboîter par encliquetage dans les rainures de blocage (19) des patins de glissement en matière synthétique (7), et dont la position est déterminée par rapport à celle des boulons de centrage (27) de la coquille de moule inférieure (22), de telle façon que les patins de glissement (7) se trouvent centrés dans les rainures de guidage (6).

Fig.1

Fig.2

1

EP 0 146 112 B1

Fig.3

6
7
5
3
1

Fig.4

7
16
11
14
9
15

Fig.5

16
11
7
17
14

Fig.6

7
17
9
14
16

2

Fig.7

Fig.8

Fig. 9

Fig. 11

Fig. 10

27

27

**Fig.12**

22

28

28

24

2

22

27

27

**Fig.13**